(19) Europäisches Patentamt
European Patent Office
Office européen des brevets

(11) EP 3 411 416 B1

(12) EUROPÄISCHE PATENTSCHRIFT

(45) Veröffentlichungstag und Bekanntmachung des Hinweises auf die Patenterteilung:
**08.04.2020 Patentblatt 2020/15**

(21) Anmeldenummer: **17702123.5**

(22) Anmeldetag: **02.02.2017**

(51) Int Cl.:
***C08F 2/10*** $^{(2006.01)}$ ***C02F 5/10*** $^{(2006.01)}$
***C08F 2/38*** $^{(2006.01)}$ ***C08F 220/06*** $^{(2006.01)}$
***C08F 120/06*** $^{(2006.01)}$ ***C08L 33/02*** $^{(2006.01)}$

(86) Internationale Anmeldenummer:
**PCT/EP2017/052191**

(87) Internationale Veröffentlichungsnummer:
**WO 2017/134128 (10.08.2017 Gazette 2017/32)**

(54) **VERFAHREN ZUR HERSTELLUNG VON ACRYLSÄURE-POLYMEREN**

METHOD FOR THE PREPARATION OF ACRYLIC ACID POLYMERS

PROCEDE DE FABRICATION DE POLYMERES D'ACIDE ACRYLIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.02.2016 EP 16154168**

(43) Veröffentlichungstag der Anmeldung:
**12.12.2018 Patentblatt 2018/50**

(73) Patentinhaber: **BASF SE**
**67056 Ludwigshafen am Rhein (DE)**

(72) Erfinder:
- **BARTH, Johannes**
  **200137 Shanghai (CN)**
- **FONSECA, Gledison**
  **67056 Ludwigshafen (DE)**
- **FAUL, Dieter**
  **67056 Ludwigshafen (DE)**
- **ERNST, Martin**
  **67056 Ludwigshafen (DE)**
- **DETERING, Jürgen**
  **67056 Ludwigshafen (DE)**
- **LEIFELD, Ferdinand**
  **67056 Ludwigshafen (DE)**
- **TUERKOGLU, Gazi**
  **67056 Ludwigshafen (DE)**

(74) Vertreter: **BASF IP Association**
**BASF SE**
**G-FLP-C6**
**67056 Ludwigshafen (DE)**

(56) Entgegenhaltungen:
**WO-A1-2012/104304 WO-A1-2012/104401**
**US-A- 5 216 099**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 411 416 B1

## Beschreibung

Die Erfindung betrifft ein Verfahren zur Herstellung von wässrigen Lösungen von Acrylsäure-Polymeren.

Dispergiermittel, insbesondere Polyacrylsäuren, finden eine breite Anwendung in technischen Prozessen, bei denen ein Feststoff in eine pumpfähige Dispersion überführt wird. Um eine breite industrielle Anwendung zu gewährleisten, müssen diese Dispersionen, auch Slurries genannt, sowohl eine gute Pumpfähigkeit als auch Lagerbeständigkeit (geringe Alterung der Pumpfähigkeit) bei gleichzeitig hohem Feststoffgehalt aufweisen. Letzteren gilt es möglichst zu steigern aufgrund der hohen Energie- und Transportkosten. Ein typisches Beispiel ist die Verwendung von wässrigen Calciumcarbonat-Slurries bei der Herstellung von graphischen Papieren. Während gute Fließeigenschaften der Slurries im Wesentlichen die Prozessfähigkeit bei der Papierherstellung bzw. des Papier-Coatings sicherstellen, bedingt die Feinheit des dispergierten Feststoffs die optischen Eigenschaften des daraus hergestellten Papiers, wie beispielsweise die Opazität. Eine geringere Partikelgröße bei gleichem Feststoffgehalt der Slurry ergibt eine höhere Opazität des daraus hergestellten Papiers. Die Partikelgröße wird dabei nicht nur durch den Eintrag von mechanischer Energie während der Nassvermahlung des Pigments, sondern auch durch die Wahl des eingesetzten Dispergiermittels entscheidend beeinflusst.

Es ist bekannt, dass mittels radikalischer Polymerisation hergestellte niedermolekulare Polyacrylsäuren gute dispergierende Eigenschaften aufweisen. Für eine gute Wirkung sollte das Molekulargewichtsmittel (Mw) dieser Polymere < 50 000 sein. Oft sind Polyacrylsäuren mit Mw < 10 000 besonders effektiv. Um niedermolekulare Polyacrylsäuren herzustellen, werden Molekulargewichtsregler bzw. Kettenüberträger während der radikalischen Polymerisation von Acrylsäure zugesetzt. Diese Regler müssen auf den Polymerisationsinitiator sowie auf den Polymerisationsprozess abgestimmt sein. Bekannte Initiatoren sind beispielsweise anorganische und organische Perverbindungen, wie Peroxodisulfate, Peroxide, Hydroperoxide und Perester, Azoverbindungen wie 2,2'-Azobisisobutyronitril und Redoxsysteme mit anorganischen und organischen Komponenten.

EP-A 405 818 offenbart ein Verfahren zur Herstellung von Polymeren aus monoethylenisch ungesättigten Monocarbonsäuren und optional weiteren Monomeren mit Natriumpersulfat als Starter in Gegenwart von Hypophosphit als Regler, bei dem ein alkalisches Neutralisationsmittel während der Polymerisation in einer Menge, die ausreicht, um mindestens 20 % der sauren Gruppen zu neutralisieren, zugegen ist. Die erhaltenen niedermolekularen Polymere enthalten mindestens 80 % des aus dem Hypophosphit stammenden Phosphors. Mindestens 70 % des Phosphors sollen sich als Dialkylphosphinat innerhalb der Polymerkette wieder finden. Die so hergestellten Polymere werden u.a. als Waschmitteladditive, Dispergiermittel für Clay-Slurries oder Belagsverhinderer für die Wasserbehandlung eingesetzt.

In den Ausführungsbeispielen wird Acrylsäure in Zulauf-Fahrweise in Gegenwart von Hypophosphit als Regler und Natriumpersulfat als Starter in Wasser polymerisiert, wobei während der Polymerisation Natronlauge als weiterer kontinuierlicher Zulauf zugegeben wird. Es wird eine wässrige Polyacrylsäure mit einem gewichtsmittleren Molekulargewicht $M_w$ von 2700 g/mol erhalten, welche 72% des im Natriumphosphit enthaltenen Phosphors als Dialkylphosphinat, 18% als Monoalkylphosphinat und 10% in Form anorganischer Salze enthält. In einem Vergleichsbeispiel wird auf den Natronlaugezulauf verzichtet und erst nach Beendigung der Polymerisation mit Natronlauge neutralisiert. Dabei wird eine wässrige Polyacrylsäure mit einem gewichtsmittleren Molekulargewicht $M_w$ von 4320 g/mol erhalten, welche nur 45% des im Natriumphosphit enthaltenen Phosphors als Dialkylphosphinat, 25% als Monoalkylphosphinat und 30% in Form anorganischer Salze enthält.

EP-A 510 831 offenbart ein Verfahren zur Herstellung von Polymeren aus monoethylenisch ungesättigten Monocarbonsäuren, monoethylenisch ungesättigten Dicarbonsäuren und optional weiteren Monomeren, die keine Carboxylgruppe enthalten, in Gegenwart von hypophosphoriger Säure als Kettenüberträger. Mindestens 40 % des im Polymer eingebauten Phosphors liegen als Monoalkylphosphinat und Monoalkylphosphonat am Ende der Polymerkette vor. Die Copolymere finden u.a. Verwendung als Dispergiermittel, Belagsinhibitor und Waschmitteladditiv.

EP-A 618 240 offenbart ein Verfahren zur Polymerisation von Monomeren in Wasser in Gegenwart eines wasserlöslichen Initiators und hypophosphoriger Säure oder eines ihrer Salze. Das Verfahren wird so durchgeführt, dass am Ende der Polymerisation der Polymergehalt mindestens 50 Gew.-% beträgt. Durch diese Fahrweise gelingt es, die Menge an aus dem Hypophosphit stammenden, im Polymer eingebauten Phosphor zu erhöhen. Dieser liegt in Form von Dialkylphoshinat, Monoalkylphosphinat sowie Monoalkylphosphonat im Polymer vor. Über die Verteilung des Phosphors wird keine Aussage gemacht. Die Copolymere finden u.a. Verwendung als Dispergiermittel, Belagsinhibitoren und Waschmitteladditive.

EP-A 1 074 293 offenbart Phosphonat-terminierte Polyacrylsäure mit einem Molekulargewicht $M_w$ von 2000 bis 5800 g/mol als Dispergiermittel zur Herstellung wässriger Slurries von Calciumcarbonat, Kaolin, Ton, Talk und Metalloxiden mit einem Feststoffgehalt von mindestens 60 Gew.-%.

WO 2012/104401 beschreibt ein Verfahren zur Herstellung von wässrigen Lösungen von Acrylsäure-Polymeren durch Polymerisation von Acrylsäure in Zulauf-Fahrweise mit Peroxodisulfat als Starter in Gegenwart von Hypophosphit in Wasser als Lösungsmittel, bei dem Wasser und gegebenenfalls ein oder mehrere ethylenisch ungesättigte Comonomere vorgelegt und Acrylsäure in saurer, nicht neutralisierter Form, gegebenenfalls eines oder mehrere ethylenisch

ungesättigte Comonomere, eine wässrige Peroxodisulfat-Lösung und eine wässrige Hypophosphit-Lösung, kontinuierlich zugegeben werden, wobei der Comonomer-Gehalt 30 Gew.-%, bezogen auf den Gesamtmonomer-Gehalt, nicht übersteigt. Die dabei erhaltenen Acrylsäure-Polymere sind dadurch gekennzeichnet, dass mindestens 76 % des Phosphor-Gesamtgehalts in Form von in der Polymerkette gebundenen Phosphinat-Gruppen vorliegt.

WO 2012/104304 beschreibt ein Verfahren zur Herstellung von wässrigen Lösungen von Acrylsäure-Polymeren durch Polymerisation von Acrylsäure in Zulauf-Fahrweise mit einem RadikalStarter in Gegenwart von Hypophosphit in Wasser als Lösungsmittel, bei dem

(i) Wasser und gegebenenfalls ein oder mehrere ethylenisch ungesättigte Comonomere vorgelegt,
(ii) Acrylsäure in saurer, nicht neutralisierter Form, gegebenenfalls ein oder mehrere ethylenisch ungesättigte Comonomere, wässrige Radikalstarter-Lösung und wässrige Hypophosphit-Lösung kontinuierlich zugegeben werden,
(iii) nach Beendigung des Acrylsäure-Zulaufs zu der wässrigen Lösung eine Base zugegeben wird,

wobei der Comonomer-Gehalt 30 Gew.-%, bezogen auf den Gesamtmonomer-Gehalt, nicht übersteigt, dadurch gekennzeichnet, dass
die wässrige Hypophosphit-Lösung während einer Gesamtzulaufzeit aus drei aufeinander folgenden Zulaufzeitspannen $\Delta t_I$, $\Delta t_{II}$ und $\Delta t_{III}$ zugegeben wird, wobei die mittlere Zulaufgeschwindigkeit in der zweiten Zulaufzeitspanne $\Delta t_{II}$ größer ist als die mittleren Zulaufgeschwindkeiten in der ersten und in der dritten Zulaufzeitspanne $\Delta t_I$, $\Delta t_{III}$. Gemäß den Beispielen 4 und 6 bis 8 der WO 2012/104304 beträgt der zeitlich gemittelte Dosierzeitpunkt der Hypophosphit-Lösung das 0,476-fache der gesamten Zulaufzeit der Acrylsäure, gemäß Beispiel 5 beträgt dieses Verhältnis 0,5, gemäß Beispiel 9 0,594. Gemäß den Beispielen 1 bis 8 und 10 beträgt das Verhältnis des mittleren Dosierzeitpunkts des Hypophosphit-Reglers zur gesamten Dosierzeit des Reglers 0,5.

US 5,216,099 beschreibt Acrylsäure-Polymere mit intern gebundenem Phosphor. Die Acrylsäure-Polymere werden in einem Zulaufverfahren hergestellt, wobei die Acrylsäure in situ neutralisiert wird. In den Beispielen werden Gehalte an intern gebundenem Phosphor von bis zu 75%, bezogen auf den Gesamt-Phosphorgehalt, erzielt.

Die gemäß WO 2012/104401 und WO 2012/104304 erhaltenen wässrigen Lösungen und die Acrylsäure-Polymere werden als Dispergiermittel in wässrigen Feststoff-Dispersionen von $CaCO_3$, Kaolin, Talkum, $TiO_2$, ZnO, $ZrO_2$, $Al_2O_3$ oder MgO verwendet.

Niedermolekulare Homo- und Copolymere auf Basis von Acrylsäure finden als wässrige Lösung oder in fester Form vielfältige Anwendung, nicht nur als effektive Dispergiermittel, sondern auch als Belagsverhinderer in wasserführenden Systemen, wie z.B. in industriellen Wasserkreisläufen, in Anlagen zur Meerwasserentsalzung und beim maschinellen Geschirrspülen oder als Inkrustationsinhibitoren bei der Textilwäsche .

Molekulargewichtsregler können organischer oder anorganischer Natur sein und enthalten häufig chemisch gebundenen Schwefel oder Phosphor. Nachteilig ist, dass bei Einsatz größerer Mengen an Regler diese nicht vollständig in das Polymer eingebaut werden und somit ein Restgehalt an Regler im Produkt verbleibt oder zur Bildung von Nebenprodukten führt, mit unerwünschten Folgen für die jeweilige Anwendung. Die nachträgliche Entfernung des nicht in das Polymer eingebauten Reglers und der Nebenprodukte ist, wenn überhaupt möglich, zeit- und kostenintensiv. Wenn Phosporverbindungen eingesetzt werden, wird der nicht eingebaute Regler auch als anorganischer Phosphor bezeichnet. Dieser Anteil kann die ursprünglich eingesetzte Phosphorverbindung oder ein Folgeprodukt, z.B. ein Oxidations- oder Hydrolyseprodukt sein. Es besteht Bedarf an Polymerisationsverfahren, bei dem der Regler möglichst vollständig in das Polymer eingebaut wird, und dadurch der Gehalt des Polymers an nicht umgesetztem Regler und unerwünschten Nebenprodukten deutlich reduziert wird.

Lösungspolymerisate der Acrylsäure werden üblicher Weise durch Zulaufverfahren hergestellt. Dabei wird eine Gesamtmenge m1 an Acrylsäure über einen Zeitraum (t1-t1,0), eine Gesamtmenge m2 an Radikalstarterlösung über einen Zeitraum (t2-t2,0) und eine Gesamtmenge m3 an Reglerlösung über einen Zeitraum (t3-t3,0) mit konstanter Dosierrate in eine heiße Kesselvorlage enthaltend ein Lösemittel, üblicherweise Wasser, zugegeben. Die Polymerisation findet im durchmischten Kessel im Zeitraum (t4-t4,0) statt, wobei t1,0, t2,0 bzw. t3,0 den Start des jeweiligen Zulaufs und t4,0 den Beginn der Polymerisation bestimmt. Der Zeitpunkt t1 ist das Ende der Acrylsäuredosierung, t2 das Ende der Starterdosierung, t3 das Ende der Reglerdosierung und t4 das Ende der Polymerisation, einschließlich der von t1 bis t4 stattfindenden Nachpolymerisation.

Verarbeiter von Polymeren verlangen nach Produkten mit verringerter Menge an Nebenprodukten und Resten von Verfahrenshilfsstoffen wie Initiatoren und Molmassenreglern. Aufgabe der Erfindung ist es, ein Verfahren zur Herstellung von Acrylsäurepolymeren mit verringerter Reglerrestmenge bei sonst gleichbleibenden oder verbesserten Produkteigenschaften bereitzustellen. Unter Reglerrestmenge wird der Anteil an eingesetztem Regler verstanden, der nach der Polymerisation nicht kovalent an eine Polymerkette gebunden oder in eine Polymerkette eingebaut ist.

Gelöst wird die Aufgabe durch ein Verfahren zur Herstellung von wässrigen Lösungen von Acrylsäure-Polymeren durch Polymerisation von Acrylsäure in Zulauf-Fahrweise mit einem Radikalstarter in Gegenwart von Hypophosphit in Wasser als Lösungsmittel, bei dem

(i) Wasser und gegebenenfalls Acrylsäure in saurer, nicht neutralisierter Form, gegebenenfalls ein oder mehrere ethylenisch ungesättigte Comonomere, gegebenenfalls wässrige Hypophosphit-Lösung und gegebenenfalls Initiator vorgelegt werden,

(ii) Acrylsäure, gegebenenfalls ein oder mehrere ethylenisch ungesättigte Comonomere, wässrige Radikalstarter-Lösung und wässrige Hypophosphit-Lösung zugegeben werden,

(iii) nach Beendigung des Acrylsäure-Zulaufs zu der wässrigen Lösung eine Base zugegeben wird,

wobei der Comonomer-Gehalt 30 Gew.-%, bezogen auf den Gesamtmonomer-Gehalt, nicht übersteigt, dadurch gekennzeichnet, dass die Acrylsäure, die wässrige Radikalstarter-Lösung und die wässrige Hypophosphit-Lösung derart zugegeben werden, dass das Molverhältnis x von Acrylsäure zu radikalisch abstrahierbarem, Phosphor-gebundenem Wasserstoff [AS]/[P-H] über einen Zeitraum, in dem mindestens 75% der Acrylsäure umgesetzt werden, einen bis auf ± 0,5 konstanten Wert x aufweist, der im Bereich von 0,8 bis 2 liegt, dass der zeitlich gemittelte Dosierzeitpunkt der Hypophosphit-Lösung

$$\bar{t}_{dosing} = \frac{1}{m3}\int_{t3,0}^{t3}(d(t) * t)dt$$

das 0,3 bis 0,47-fache der gesamten Zulaufzeit der Acrylsäure (t1-t1,0) ist, und dass der zeitlich gemittelte Dosierzeitpunkt der Hypophosphit-Lösung das 0,3 - 0,45-fache der gesamten Laufzeit der Hypophosphit-Lösung ist.

Das Molverhältnis x von Acrylsäure zu radikalisch abstrahierbarem, Phosphor-gebundenem Wasserstoff [AS]/[P-H] beträgt somit über einen Zeitraum, in dem mindestens 75% der Acrylsäure umgesetzt werden, erfindungsgemäß mindestens 0,8 ± 0,5 (kann also während dieses Zeitraums von 0,3 bis 1,1 variieren) und maximal 2,0 ± 0,5 (kann also während dieses Zeitraums von 1,5 bis 2,5 variieren).

In einer bevorzugten Ausführungsform der Erfindung beträgt das Molverhältnis x von Acrylsäure zu radikalisch abstrahierbarem, Phosphor-gebundenem Wasserstoff [AS]/[P-H] 1,5 ± 0,5.

Als radikalisch abstrahierbarer, Phosphor gebundener Wasserstoff werden kovalente Wasserstoff-Phosphor-Bindungen verstanden, die im eingesetzten Natriumhypophosphit (1) oder im terminal an die Polymerkette gebundenen Hypophosphit (2). vorliegen

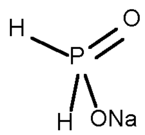

(1) Natrium hypophosphit

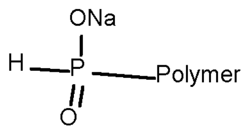

(2) terminal eingebautes Natrium hypophosphit

Natriumhypophosphit und eingebautes Hypophosphit können in Wasser in dissoziierter Form, ohne Natrium als Gegenion, und in protonierter Form vorliegen.

Im Allgemeinen wird eine Gesamtmenge m1 an Acrylsäure über einen Zeitraum (t1-t1,0), eine Gesamtmenge m2 an Radikalstarter-Lösung über einen Zeitraum (t2-t2,0) und eine Gesamtmenge m3 an wässriger Hypophosphit-Lösung über einen Zeitraum (t3-t3,0) kontinuierlich mit konstanter oder sich ändernder Dosierrate oder diskontinuierlich (portionsweise) in eine Vorlage enthaltend Wasser als Lösungsmittel zugegeben. Die Polymerisation findet im durchmischten Reaktionsgefäß im Zeitraum (t4-t4,0) statt, wobei der Zeitpunkt t4,0 den Beginn der Polymerisation bestimmt. Der Zeitpunkt t1 bestimmt das Ende der Acrylsäurezugabe, t2 bestimmt das Ende der Starterzugabe, t3 bestimmt das Ende der Reglerzugabe und t4 bestimmt das Ende der Polymerisationsreaktion, einschließlich der Nachpolymerisation im Zeitraum von t1 bis t4.

Mit einem kinetischen Modell für die (Co)polymerisation von Acrylsäure in Gegenwart von Hypophosphit wurde berechnet, wie durch eine Änderung der Hypophosphit-Dosierung die Restmenge an Regler, m3', welcher bei Polymerisationsende t4 nicht in Polymeres eingebaut wurde - bei sonst unveränderter Prozessdurchführung - verringert werden kann. Die Restmenge an Regler m3' weist keine kovalente Bindung mit dem Polymer (C-P Bindung) auf und wird daher im Folgenden als anorganischer Phosphor bezeichnet.

Er kann in Form des eingesetzten Reglers (1) oder in anderen Oxidationsstufen des Hypophosphits wie z.B. Phosphonsäure oder Phosphorsäure vorliegen. Möglich sind auch die dissoziierten, protonierten und strukturisomeren Formen der jeweiligen Oxidationsstufen.

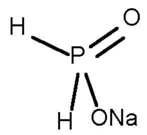

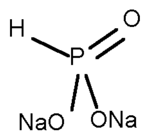

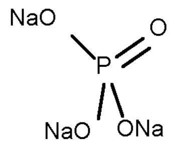

(1) Natrium hypophosphit (2) Natrium phosphit (3) Natrium phosphat

Die Menge an anorganischem Phosphor m3' und der Anteil m3'/m3 werden umso geringer, je kleiner die Zulaufzeit des Hypophosphit-Reglers t3 - t3,0 gewählt wird. Ebenso wird die Menge an anorganischem Phosphor m3' umso geringer, je mehr Hypophosphit-Regler anteilig zu frühen Zeiten innerhalb der gesamten Reglerdosierzeit t3 - t3,0 zugegeben wird. Auch wird m3' geringer, wenn die Gesamtmenge an dosiertem Regler m3 in der Rezeptur reduziert wird. Als Maß für den zeitlich gemittelten Dosierzeitpunkt des Reglers eignet sich die Größe:

$$\bar{t}_{dosing} = \frac{1}{m3}\int_{t3,0}^{t3}(d(t) * t)dt$$

Dabei ist t die Zeit von t3,0 bis t3, d(t) ist die Dosierrate (Einheit Masse / Zeit) des Regler zum Zeitpunkt t.

Der zeitlich gemittelte Dosierzeitpunkt beschreibt die Zugabe der gesamten Reglermenge im zeitlichen Mittel. Zur Erläuterung werden zwei Beispiele für verschiedene Reglerdosierungen einer bestimmten Menge Regler m3, einschließlich der vorgelegten Reglermenge, in einer bestimmten Dosierzeit (t3-t3,0) aufgeführt:

a) Beispielsweise ergibt sich bei einer Zugabe des Reglers mit konstanter Dosierrate während der gesamten Zeit der Reglerdosierung (t3-t3,0) ein mittlerer Dosierzeitpunkt von $\bar{t}_{dosing}$= (t3-t3,0)/2.

b) Beispielsweise ergibt bei höherer Dosierrate im Intervall [t3,0 - (t3-t3,0)/2] (verglichen mit der Dosierraten in a)) und einer um dasselbe Maß erniedrigten Dosierrate im Intervall [(t3-t3,0)/2 - t3] ein mittlerer Dosierzeitpunkt von $\bar{t}_{dosing}$< (t3-t3,0)/2

In einer bevorzugten Ausführungsform der Erfindung beginnen alle Zuläufe zum gleichen Zeitpunkt t0, d. h. t1,0 = t2,0 = t3,0 = t0.

In diesem speziellen Fall beträgt das Verhältnis des zeitlich gemittelten Dosierzeitpunktes des Reglers 0,3 bis 0,47.

Weiterhin beträgt das Verhältnis des mittleren Dosierzeitpunktes des Reglers zur gesamten Dosierzeit des Reglers von 0,3 bis 0,45.

Der Zulauf des Hypophosphit-Reglers kann kontinuierlich oder diskontinuierlich in diskreten Mengen m31, m32, m33 usw. zu diskreten Zeitpunkten t31, t32, t33 usw. bis zum Zeitpunkt t3 erfolgen.

Es zeigt sich, dass die Molekulargewichtsverteilung trotz der Verringerung der Menge an anorganischem Phosphor (m3') erhalten bleibt, wenn das molare Verhältnis der im Reaktionsbehälter momentan vorliegenden Konzentrationen von radikalisch abstrahierbarem, Phosphor-gebundenem Wasserstoff und Acrylsäure [AS]/[P-H] im Bereich von (0,8 bis 2,0) $\pm$ 0,5, bevorzugt 1,5 $\pm$ 0,5 über einen Zeitraum, in dem mindestens 75% des Monomerumsatzes erfolgt, durch Steuerung der Prozessparameter konstant gehalten wird. Eine Verringerung des Umsatzbereiches, während dessen das Verhältnis von Acrylsäure zu Phosphor-gebundenem Wasserstoff konstant gehalten wird, führt zu einer Verbreiterung der Molekulargewichtsverteilung (siehe Beispiel 3). Die Abweichung vom bevorzugten Wert [AS]/[P-H] = 1,5 $\pm$ 0,5 sollte auch außerhalb der Grenzen eines Monomerumsatzes von mindestens 75% möglichst gering sein, um eine enge Molekulargerichtsverteilung zu erhalten. Der Wert von [AS]/[P-H] außerhalb des Umsatzbereiches von 75% muss stets kleiner sein als [AS]/[P-H] = 4,5.

Die Einhaltung von definierten Molekulargewichtsverteilungen ist für einige Anwendungen des Polymeren, z.B. als Dispergiermittel für Calciumcarbonat, von Bedeutung (siehe Tabelle 1).

In einer bevorzugten Ausführungsform beträgt das Molverhältnis von Acrylsäure zu Phosphor-gebundenem Wasserstoff [AS]/[P-H] über einen Zeitraum, in dem mindestens 80% der Acrylsäure umgesetzt werden, 1,5 $\pm$ 0,5. Der maximale Wert von [AS]/[P-H] außerhalb des Bereiches von 80% des Acrylsäureumsatzes beträgt maximal 4,5.

In einer besonders bevorzugten Ausführungsform beträgt das Molverhältnis von Acrylsäure zu Phosphor-gebundenem Wasserstoff [AS]/[P-H] über einen Zeitraum, in dem mindestens 80% der Acrylsäure umgesetzt werden,

1,5 ± 0,25. Der maximale Wert von [AS]/[P-H] außerhalb des Bereiches von 80 % des Acrylsäureumsatzes beträgt maximal 4,5.

Weiterhin führt ein größerer Wert für das molare Verhältnis [AS]/[P-H] als 1,5 zu höheren zahlenmittleren Molmassen als Mn = 2800 g/mol, während ein kleinerer Wert als 1,5 zu kleineren zahlenmittleren Molmassen als Mn = 2800 g/mol führt. Es zeigt sich auch, dass die mittlere Molmasse Mn der Polymerverteilung linear mit dem Verhältnis [AS]/[P-H] ansteigt und dass die Verteilungsbreite (gemessen mit PDI =Mw/Mn) auf Werte oberhalb PDI = 1,7 zunimmt, wenn ein bestimmtes Verhältnis [AS]/[P-H] nicht über einen großen Teil des Monomer-Umsatzes (>75%) konstant gehalten wird. Dieses Konzentrations-Verhältnis ist aus kinetischer Modellierung oder aus experimentellen Methoden zugänglich. Das Verhältnis [AS]/[P-H] kann experimentell bestimmt werden. Bevorzugt ist eine zahlenmittlere Molmasse Mn von mindestens 2000 g/mol.

Die Steuerung des Polymerisationsprozesses über die Größe [AS]/[P-H] ist für die Einstellung der Molekulargewichtsverteilung entscheidend, da diese Größe die kinetische Kettenlänge der Polymere bestimmt. Zur Steuerung von [AS]/[P-H] eignen sich neben der Modellierungsmethode auch experimentelle Methoden wie Spektroskopie: NMR, Infrarot-Schwingungsspektroskopie und in-line Raman-Spektroskopie. Es eignet sich auch eine Analytik an Proben, die während der Polymerisation genommen wurde. Die Probenahme erfolgt dabei in eine bereitgestellte Inhibitor-Lösung. Die vorliegenden Konzentrationen von Acrylsäure können durch HPLC, NMR-Spektroskopie oder GC ermittelt werden. Die Konzentration der vorliegenden P-H-Funktionalitäten kann durch 31-P {1H} NMR-Spektroskopie bestimmt werden.

Im Allgemeinen beträgt die Gesamtzulaufzeit der Acrylsäure 80 bis 500 min, vorzugsweise 100 bis 400 min.

Die Comonomere können in dem Reaktionsansatz vorgelegt werden, zum Teil vorgelegt und zum Teil als Zulauf zugegeben oder ausschließlich als Zulauf zugegeben werden. Werden sie teilweise oder insgesamt als Zulauf zugegeben, so werden sie im Allgemeinen gleichzeitig mit der Acrylsäure zugegeben.

Im Allgemeinen wird Wasser vorgelegt und auf die Reaktionstemperatur von mindestens 75 °C, bevorzugt 90 bis 115 °C, besonders bevorzugt 95 bis 105 °C erwärmt.

Zusätzlich kann eine wässrige Lösung von Phosphoriger Säure als Korrosionsinhibitor mit vorgelegt werden.

Anschließend werden die kontinuierlichen Zuläufe von Acrylsäure, gegebenenfalls von ethylenisch ungesättigtem Comonomer, Starter und Regler gestartet. Acrylsäure wird in nicht neutralisierter, saurer Form zugegeben. Im Allgemeinen werden die Zuläufe gleichzeitig gestartet. Sowohl Peroxodisulfat als Starter als auch Hypophoshit als Regler werden in Form ihrer wässrigen Lösungen eingesetzt.

Hypophosphit kann in Form von Hypophosphoriger Säure (Phosphinsäure) oder in Form von Salzen der Hypophosphorigen Säure eingesetzt werden. Besonders bevorzugt wird Hypophosphit als Hypophosphorige Säure oder als Natriumsalz eingesetzt. Hypophosphit kann ausschließlich als Zulauf zugegeben werden oder zum Teil vorgelegt werden. Der Hypophosphit-Gehalt der wässrigen Hypophosphit-Lösung beträgt vorzugsweise 35 bis 70 Gew.-%.

Bevorzugt wird Hypophosphit in Mengen von 3 bis 14 Gew.-%, bevorzugt 4 bis 10 Gew.-%, besonders bevorzugt 5 bis 8 Gew.-%, bezogen auf die Gesamtmenge an Monomeren, eingesetzt.

Bevorzugter Radikalstarter ist Peroxodisulfat. Peroxodisulfat wird im Allgemeinen in Form des Natrium-, Kalium- oder Ammoniumsalzes eingesetzt. Der Gehalt einer bevorzugt verwendeten wässrigen Peroxodisulfat-Lösung beträgt 5 bis 10 Gew.-%.

Bevorzugt wird Peroxodisulfat in Mengen von 0,5 bis 10 Gew.-%, besonders bevorzugt 0,8 bis 5 Gew.-%, bezogen auf die Gesamtmenge an Monomeren (Acrylsäure und gegebenenfalls Comonomere), eingesetzt.

Weiterhin kann Wasserstoffperoxid z.B. in Form einer 50%igen wässrigen Lösung als Radikalstarter eingesetzt werden. Auch eignen sich Redoxinitiatoren auf Basis von Peroxiden und Hydroperoxiden und reduzierend wirkenden Verbindungen wie beispielsweise Wasserstoffperoxid in Gegenwart von Eisen(II)sulfat und/oder Natriumhydroxymethansulfinat.

Die Dauer des Starter-Zulaufs kann bis zu 50% länger sein als die Dauer des Acrylsäure-Zulaufs. Vorzugsweise ist die Dauer des Starter-Zulaufs um ca. 3 bis 20% länger als die Dauer des Acrylsäure-Zulaufs. Die Gesamtdauer des Regler-Zulaufs ist bevorzugt gleich der Dauer des Acrylsäure-Zulaufs. Im Allgemeinen ist die Gesamtdauer des Regler-Zulaufs gleichlang oder bis zu 50 % kürzer oder länger als die Dauer des Acrylsäure-Zulaufs.

Die Dauer des Monomer-Zulaufs bzw. - bei Verwendung eines Comonomeren - der Monomer-Zuläufe beträgt beispielsweise 2 bis 5 h. Beispielsweise endet bei gleichzeitigem Start aller Zuläufe der Regler-Zulauf 10 bis 30 min vor dem Ende des Monomer-Zulaufs, und endet der Starter-Zulauf 10 bis 30 min nach dem Ende des Monomer-Zulaufs.

Im Allgemeinen wird nach Beendigung des Acrylsäure-Zulaufs zu der wässrigen Lösung eine Base zugegeben. Dadurch wird das gebildete Acrylsäure-Polymer zumindest teilweise neutralisiert. Teilweise neutralisiert heißt, dass nur ein Teil der in dem Acrylsäure-Polymer enthaltenen Carboxylgruppen in der Salzform vorliegt. Im Allgemeinen wird so viel Base zugegeben, dass der pH-Wert anschließend im Bereich von 3 bis 8,5, vorzugsweise 4 bis 8,5, insbesondere 4,0 bis 5,5 (teilweise neutralisiert) oder 6,5 bis 8,5 (vollständig neutralisiert) liegt. Als Base wird vorzugsweise Natronlauge eingesetzt. Daneben können auch Ammoniak oder Amine, beispielsweise Triethanolamin, eingesetzt werden. Der dabei erzielte Neutralisationsgrad der erhaltenen Polyacrylsäuren liegt zwischen 15 und 100 %, bevorzugt zwischen 30 und 100 %. Die Neutralisation erfolgt im Allgemeinen über einen längeren Zeitraum von beispielsweise ½ bis 3 Stunden,

um die Neutralisationswärme gut abführen zu können.

Im Allgemeinen wird die Polymerisation unter Inertgasatmosphäre durchgeführt. Dabei werden Acrylsäure-Polymere erhalten, deren terminal gebundener Phosphor im Wesentlichen (im Allgemeinen zu mindestens 90 %) in Form von Phosphinat-Gruppen vorliegt.

In einer weiteren Variante wird nach Beendigung der Polymerisation ein Oxidationsschritt durchgeführt. Durch den Oxidationsschritt werden terminale Phosphinat-Gruppen in terminale Phosphonat-Gruppen überführt. Die Oxidation erfolgt im Allgemeinen durch Behandlung des Acrylsäure-Polymers mit einem Oxidationsmittel, bevorzugt mit wässriger WasserstoffperoxidLösung.

Es werden wässrige Lösungen von Acrylsäure-Polymeren mit einem Feststoffgehalt von im Allgemeinen mindestens 30 Gew.-%, bevorzugt mindestens 35 Gew.-%, besonders bevorzugt 40 bis 70 Gew.-%, insbesondere 50 bis 70 Gew.-% Polymer erhalten.

Die erfindungsgemäß erhältlichen Acrylsäure-Polymeren weisen einen Phosphor-Gesamtgehalt von organisch und gegebenenfalls anorganisch gebundenem Phosphor auf, wobei

(a) ein erster Teil des Phosphors in Form von in der Polymerkette gebundenen Phosphinat-Gruppen vorliegt,
(b) ein zweiter Teil des Phosphors in Form von am Polymerkettenende gebundenen Phosphinat- und/oder Phosphonat-Gruppen vorliegt,
(c) gegebenenfalls ein dritter Teil des Phosphors in Form von gelösten anorganischen Phosphorsalzen vorliegt,

und im Allgemeinen mindestens 86% des Phosphor-Gesamtgehalts in Form von in der Polymerkette oder am Polymerkettenende gebundenen Phosphinat- oder Phosphonat-Gruppen vorliegt.

Bevorzugt liegen mindestens 88%, besonders bevorzugt mindestens 90% des Phosphor-Gesamtgehalts in Form von in der Polymerkette oder am Kettenende gebundenen Phosphinat-Gruppen vor. Durch die erfindungsgemäße Zulauf-Fahrweise wird ein besonders hoher Gehalt an in der Polymerkette gebundenem Phosphor erhalten.

Im Allgemeinen liegen höchstens 15 %, bevorzugt höchstens 10 % des Phosphors in Form von gelösten anorganischen Phosphorsalzen vor. Besonders bevorzugt liegen 0 bis 10 % und insbesondere 0 bis 6 % des Phosphors in Form von gelösten anorganischen Phosphorsalzen vor.

Bezogen auf die Masse der Polymere beträgt die Menge an gelösten anorganischen Phosphorsalzen bevorzugt < 0,5 Gew.-%.

Im Allgemeinen beträgt das gewichtsmittlere Molekulargewicht Mw des Acrylsäure-Polymers 1000 bis 20 000 g/mol, bevorzugt 3500 bis 12 000 g/mol, besonders bevorzugt 3500 bis 8000 g/mol, insbesondere 3500 bis 6500 g/mol und speziell 4000 bis 6500 g/mol. Das Molekulargewicht kann innerhalb dieser Bereiche gezielt durch die verwendete Reglermenge eingestellt werden.

Der Anteil von Polymeren mit einem gewichtsmittleren Molekulargewicht Mw von < 1000 g/mol beträgt im Allgemeinen ≤ 10 Gew.-%, bevorzugt ≤ 5 Gew.-%, bezogen auf das gesamte Polymer.

Der Anteil von Polymeren mit einem gewichtsmittleren Molekulargewicht Mw von >40 000 g/mol beträgt weniger als 3 Gew.-%, bevorzugt weniger als 1 Gew.-%, besonders bevorzugt weniger als 0,5 Gew.-%, bezogen auf das gesamte Polymer.

Im Allgemeinen beträgt der Polydispersitätsindex des Acrylsäure-Polymers $M_w / M_n \leq 2{,}3$, bevorzugt 1,5 bis 2,1, beispielsweise 1,7.

Das Acrylsäure-Polymer kann bis zu 30 Gew.-%, bevorzugt bis zu 20 Gew.-%, besonders bevorzugt bis zu 10 Gew.-%, bezogen auf alle ethylenisch ungesättigten Monomere, ethylenisch ungesättigte Comonomere mit einpolymerisiert enthalten. Beispiele für geeignete ethylenisch ungesättigte Comonomere sind Methacrylsäure, Maleinsäure, Maleinsäureanhydrid, Vinylsulfonsäure, Allylsulfonsäure und 2-Acrylamido-2-methylpropansulfonsäure (AMPS) sowie deren Salze. Auch Mischungen dieser Comonomere können enthalten sein.

Insbesondere bevorzugt sind Acrylsäure-Homopolymere ohne Comonomer-Anteil. Die erhaltenen wässrigen Lösungen der Acrylsäure-Polymere können direkt als Dispergiermittel eingesetzt werden.

Die Erfindung betrifft auch die Verwendung der wässrigen Lösungen der Acrylsäure-Polymere bzw. der Acrylsäure-Polymere selbst als Dispergierhilfsmittel für anorganische Pigmente und Füllstoffe, wie z.B. $CaCO_3$, Kaolin, Talkum, $TiO_2$, ZnO, $ZrO_2$, $Al_2O_3$ und MgO.

Die daraus gewonnenen Slurries werden als Weißpigmente für graphische Papiere und Anstrichfarben, als Deflocculants für die Herstellung von keramischen Werkstoffen oder auch als Füllstoffe für Thermoplasten verwendet. Die Acrylsäure-Polymere können aber für andere Zwecke verwendet werden, beispielsweise in Waschmitteln, Geschirrreinigern, technischen Reinigern, zur Wasserbehandlung oder als Ölfeldchemikalien. Falls gewünscht können sie vor der Anwendung durch verschiedene Trocknungsverfahren, z.B. Sprühtrocknung, Sprühgranulierung, Walzentrocknung oder Schaufeltrocknung, in Feststoffe z.B. in Pulver oder Granulate überführt werden.

Besonders bevorzugte Dispersionen (Slurries), für die die erfindungsgemäßen Acrylsäure-Polymere verwendet werden, ist gemahlenes Calciumcarbonat. Die Mahlung wird kontinuierlich oder diskontinuierlich in wässriger Suspension

durchgeführt. Der Calciumcarbonatgehalt liegt in dieser Suspension in der Regel bei ≥ 50 Gew.-%, bevorzugt bei ≥ 60 Gew.-% und besonders bevorzugt bei ≥ 70 Gew.-%. Üblicherweise werden, jeweils bezogen auf das in der Suspension enthaltene Calciumcarbonat, 0,1 bis 2 Gew.-%, vorzugsweise 0,3 bis 1,5 Gew.-%, der erfindungsgemäß verwendeten Polyacrylsäure eingesetzt. Vorzugsweise haben in diesen Calciumcarbonat-Slurries nach der Mahlung 95 % der Teilchen eine Teilchengröße von kleiner als 2 μm und 75 % der Teilchen eine Teilchengröße von kleiner als 1 μm. Die erhaltenen Calciumcarbonat-Slurries weisen ausgezeichnete rheologische Eigenschaften auf und sind auch nach mehrtägiger Lagerung noch pumpfähig, wie aus den Viskositätsverläufen in Tabelle 2 ersichtlich ist.

Gegenstand der Erfindung ist auch die Verwendung der wässrigen Lösungen der Acrylsäure-Polymere als Belagsinhibitoren in wasserführenden Systemen.

Durch die erfindungsgemäßen Acrylsäure-Polymere wird insbesondere die Bildung von Calciumsulfat- und Calciumcarbonat-Belägen auf Wärmeübertragungsflächen, auf Membranoberflächen oder in Rohrleitungen inhibiert.

Wasserführende Systeme, in denen die Acrylsäure-Polymere verwendet werden können, sind insbesondere Meerwasser-Entsalzungsanlagen, Kühlwassersysteme und Kesselspeisewassersysteme.

Im Allgemeinen werden die erfindungsgemäßen Polymere den wasserführenden Systemen in Mengen von 0,1 mg/l bis 100 mg/l zugegeben. Die optimale Dosierung richtet sich nach den Erfordernissen der jeweiligen Anwendung bzw. nach den Betriebsbedingungen des jeweiligen Verfahrens. So werden bei der thermischen Meerwasserentsalzung die Polymere bevorzugt in Konzentrationen von 0,5 mg/l bis 10 mg/l eingesetzt. In industriellen Kühlkreisläufen oder Kesselspeisewassersystemen finden Polymerkonzentrationen bis zu 100 mg/l Anwendung. Häufig werden Wasseranalysen durchgeführt, um den Anteil belagsbildender Salze und somit die optimale Dosierung zu ermitteln.

Den wasserführenden Systemen können auch Formulierungen zugegeben werden, die neben den erfindungsgemäßen Polymeren je nach Anforderung u.a. Phosphonate, Polyphosphate, Zinksalze, Molybdatsalze, organische Korrosionsinhibitoren wie Benzotriazol, Tolyltriazol, Benzimidazol oder Ethinylcarbinolalkoxylate, Biozide, Komplexbildner und/oder Tenside enthalten können. Beispiele für Phosponate sind 1-Hydroxyethan-1.1-diphosphonsäure (HEDP), 2-Phosphonobutan-1,2,4-tricarbonsäure (PBTC), Aminotrimethylenphosphonsäure (ATMP) Diethylentriaminpenta(methylen-phosphonsäure) (DTPMP) und Ethylendiamintetra(methylenphosphonsäure) (EDTMP), die jeweils in Form ihrer Natriumsalze verwendet werden.

Die erfindungsgemäßen Acrylsäure-Polymere eignen sich auch als Bestandteil von Reinigungsmittel-, Spülmittel- und Waschmittelzusammensetzungen. Durch ihre schmutzdispergierende und belagsinhibierende Wirkung leisten sie einen erheblichen Beitrag zur Reinigungs- und Klarspülleistung maschineller Geschirrspülmittel. So sorgen sie dafür, dass auf dem Spülgut keine Salzablagerungen der härtebildenden Calcium- und Magnesiumionen zurückbleiben. In flüssigen und festen Waschmitteln eingesetzt unterstützen sie aktiv die Waschleistung der Tenside und verhindern durch ihre schmutzdispergierenden Eigenschaften eine Vergrauung der Wäsche. Zusätzlich wirken sie als Inkrustationsinhibitoren, d.h. sie hemmen die unerwünschte Ablagerung unlöslicher Salze (z.B. unlösliche Carbonate und Silikate) auf dem textilen Gewebe.

Gegenstand der vorliegenden Erfindung ist daher auch die Verwendung der wässrigen Lösung der Acrylsäure-Polymere sowie der Acrylsäure-Polymere selbst als Dispergatoren und Belagsverhinderer in Wasch-, Spül- und Reinigungsmittelzusammensetzungen.

Die Erfindung wird durch die nachstehenden Beispiele näher erläutert.

## Beispiele

Es wurden Lösungspolymerisate aus Acrylsäure und Natriumhypophosphit hergestellt, die bei gleichen Einsatzstoffmengen für Acrylsäure, Wasser und Initiator und gleicher oder geringerer Menge Regler und gleichen Prozessparametern Temperatur, Druck, Rührerdrehzahl, Gesamtreaktionszeit (t4-t0) (verglichen mit dem Standard Prozess, Bsp. 1) geringere Mengen an anorganischem Phosphor (m3') aufwiesen.

### Durchführung der Experimente:

Ein Polymerisationskessel mit Rührer wurde durch dreimaliges Aufpressen mit Stickstoff und Evakuieren auf 200 mbar inertisiert. Der Reaktionskessel stand während der gesamten Versuchsdauer unter Überdruck (0,1-2 bar). Danach wurde der Kessel mit der gewünschten Menge Wasser und eventuell Hypophosphit befüllt und auf Reaktionstemperatur aufgeheizt. Dann wurden die Zuläufe für Acrylsäure, Regler und Starter gestartet und mit den vorgegebenen Dosierraten (Tabelle 1) in den Kessel gegeben. Der Kesselinhalt wurde durch Rühren (Drehzahlen 30-300 rpm) durchmischt. Die Dosierraten wurden gravimetrisch über ein Laborleitsystem (Labmanager, Hitec Zang) gesteuert. Während der Experimente wurden die Konzentrationen an Hypophosphit und Acrylsäure mittels Raman-Spektroskopie verfolgt. Die Messung geschah über eine Raman-Sonde, die sich direkt im Kessel befand. Zudem wurden während und nach der Polymerisation Proben (Probenmenge <1% des Kesselinhalts) entnommen und analysiert.

Messbedingungen Raman für Acrylsäure- und Hypophosphit-Konzentrationen:

Kalibrierung der Spektren mit Maßlösungen von Acrylsäure und Hypophosphit im Konzentrationsbereich 0,01 mol/L bis 2,0 mol/L in wässrigen Polyacrylsäurelösungen mit 2 bis 70 % Polyacrylsäure der Molmasse Mn = 2500 und Mw = 5500 g/mol bei 50 bis 100 °C.

Als Maß für die Berechnung der Konzentration von Hypophosphit diente das Integral der Bande im Raman-Spektrum zwischen 2277- 2463 $cm^{-1}$. Die Integrationsgrenzen variieren mit der Prozessdauer wegen der sich ändernden Polarität der Reaktionsmischung und wegen Überlagerung mit Banden des Polymeren durch steigenden Feststoffgehalt.

Als Maß für die Berechnung der Konzentration an Acrylsäure diente das Integral der Bande bei 1600-1650 $cm^{-1}$. Die Integrationsgrenzen variieren ebenfalls mit der Prozessdauer.

Messbedingungen 31P {1H} Messungen für Hypophosphit:

Der Gehalt an anorganischem Phosphor kann mittels 31P{H} NMR-Spektroskopie (1H-entkoppelt) ermittelt werden. Dabei entspricht der Anteil an anorganischem Phosphor dem Flächenintegral der NMR-Banden im Bereich einer chemischen Verschiebung von 0 bis 12 ppm, gemessen an der NMR-Intensität im gesamten Spektrum.

Messbedingungen HPLC für Acrylsäure:

Die Konzentration an Acrylsäure während und nach der Polymerisation wurde durch HPLC-Messungen von Proben bestimmt, welche aus dem Reaktor entnommen wurden. Bei der Probennahme wurden kleine Mengen Reaktionslösung in eine bereitgestellte Lösung aus Radikalstopper (Hydrochinon) in Wasser bei 5 °C gegeben. Die HPLC-Messung geschah durch säulenchromatografische Trennung der Reaktionslösung auf zwei Trennsäulen:

| | |
|---|---|
| Vorsäule Bischoff ProntoSIL 120-5-C18ACE-EPS, 5 μm | 10x4,0 mm. |
| Trennsäule: Bischoff ProntoSIL 120-5-C18ACE-EPS, 5 μm | 250x3,0 mm. |

Die Säulen wurden mit dem Laufmittelgemisch Wasser/Acetonitril betrieben. Die Probe wurde in Wasser / DMSO /Acetonitril gelöst und 5 μL in die Vorsäule injiziert. Die Säulen wurden mit einer Fließgeschwindigkeit von 0,6 mL/ min bei 126 bar und 40 °C betrieben. Die Detektion der Monomerkonzentration geschah anhand der UV-Absorbtion bei 210 nm. Die HPLC-Messung wurde mit Maßlösungen von Acrylsäure / Polyacrylsäure-Gemischen kalibriert.

Messbedingungen GPC zur Bestimmung der Molekulargewichtsverteilung:

Das Zahlenmittel Mn und das Gewichtsmittel Mw der Molekulargewichtsverteilung des Polymeren werden mittels Gelpermeationschromatographie (GPC) bestimmt. Die Molekulargewichtsverteilungen wurden mittels GPC an auf pH 7 gepufferten wässrigen Lösungen der Polymere unter Verwendung von Hydroxyethylmethacrylat-Copolymer-Netzwerk (HEMA) als stationärer Phase und von Natriumpolyacrylat-Standards ermittelt.

Kalibrierung (Bestimmung Elutionskurve, Molmasse vs. Elutionszeit) mit Natriumpolyacrylat-standards der Firma PSS im Molekulargewichtsbereich 1250 - 1 100 000 Da, PSS Poly 5; wie in M.J.R. Cantow u.a. (J.Polym.Sci. ,A-1, 5(1967)1391-1394) beschrieben, allerdings ohne die vorgeschlagene Konzentrationskorrektur.

Trennung der Molekulargewichtsverteilungen über

- PSS Suprema Vorsäule
- PSS Suprema 30
- PSS Suprema 1000
- PSS Suprema 3000

Elutionsmittel: destilliertes Wasser gepuffert bei pH 7,2

Säulen-Temperatur : 35 °C

(fortgesetzt)

| | | | |
|---|---|---|---|
| Durchflußgeschwindigkeit | : | 0,8 | mL/min |
| Injektion | : | 100 | μL |
| Konzentration | : | 1 | mg/mL (Probenkonzentration) |

Detektor : DRI Agilent 1100UV GAT-LCD 503 [260nm]

Auswertegrenze 450 g/mol.

Verwendung der Acrylsäure-Polymere als Dispergiermittel

Die hergestellten Polyacrylsäurelösungen wurden auf ihre Eignung als Dispergiermittel zur Herstellung von Slurries getestet. Dazu wurde jeweils eine Vermahlung von Calciumcarbonat (Hydrocarb OG von Omya) mit einem Dispermaten durchgeführt. Hierfür wurden jeweils 300 g Calciumcarbonat und 600 g Keramikperlen gemischt und in einem 500 ml-Doppelwandgefäß, das mit Leitungswasser gefüllt war, vorgelegt. Anschließend wurden 100 g einer 3 gew.-%igen wässrige Lösung der zu testenden Polyacrylsäure, welche zuvor mit NaOH auf pH 5 eingestellt wurde, zugegeben. Die Mahlung erfolgte mittels eines Mahlaggregats vom Typ Dispermat AE-C (Hersteller VMA-Getzmann) mit einem Kreuzbalkenrührer bei einer Umdrehungszahl von 1200 U/min. Sobald 70% des Pigments eine Teilchengröße (TGV) von kleiner 1 μm aufwiesen, wurde die Mahlung beendet (ca. 70 min, Partikelmessgerät LS 13320, Fa. Beckman Coulter). Nach der Mahlung wurde der Slurry zur Abtrennung der Keramikperlen über ein 780 μm-Filter mit Hilfe einer Porzellannutsche filtriert und der Feststoffgehalt der Slurry auf 77% eingestellt. Die Viskosität des Slurry wurde sofort, nach 1h, nach 24 h und nach 168 h mit Hilfe eines Brookfield Viskosimeters DV II bestimmt (mit Spindel Nr. 3).

Tabelle 1: Abhängigkeit der Eigenschaft als Dispergiermittel (sorgt für geringe Viskosität einer wässrigen $CaCO_3$-Dispersion) von der Menge an anorganischem Phosphor bei praktisch konstanter Molekulargewichtsverteilung (Beispiele 1, 5) und bei unterschiedlicher Molekulargewichtsverteilung, (Beispiele 1, 3, 7)

| | 0,56% anorg. P (bezogen auf Polymer) (Bsp. 1 Mn = 2800 g/mol; Mw = 4800 g/mol) | 0,20% anorg. P (bezogen auf Polymer); (Bsp. 5 Mn = 2800 g/mol; Mw = 4800 g/mol) | 0,03% anorg. P (bezogen auf Polymer) (Bsp. 3 (Mn = 3300 g/mol; Mw = 7500 g/mol) | 0,46% anorg. P. (bezogen auf Polymer) (Bsp. 7 Mn 2900 g/mol; Mw =4700 g/mol) |
|---|---|---|---|---|
| | Dynamische Viskosität in CaCO3-slurry (mPas) | | | |
| 5 min | 273 | 228 | 313 | 235 |
| 1 h | 395 | 323 | 541 | 360 |
| 24 h | 571 | 430 | 979 | 413 |
| 168 h | 689 | 496 | 1884 | 426 |

Die Beispiele1 und 5 in Tabelle 1 zeigen, dass bei konstanten mittleren Molmassen Mn und Mw die Verringerung der Menge an anorganischem Phosphor im Polymer zu einer Verbesserung der dispergierenden Eigenschaften des Polymers führt. Die Lagerstabilität der Calciumcarbonatdispersion wird deutlich erhöht (geringere Viskosität des Slurry nach einer Woche Lagerung).

Die Beispiele in Tabelle 1 zeigen weiterhin, dass sich eine Veränderung der Molekulargewichtsverteilung hin zu höheren Molekulargewichten Mn und Mw und zu einer breiteren Verteilung (größerer PDI = Mw/Mn) negativ auf die Dispergiereigenschaft für Calciumcarbonat auswirkt (Bsp. 3 im Vergleich zu Bsp. 5 und 7). Bei einer Produktverbesserung ist daher darauf zu achten, dass eine Verringerung der Menge an anorganischem Phosphor im Polymer keine Verbreiterung der Molekulargewichtsverteilung zur Folge hat.

Durch Regelung des Konzentrations-Verhältnisses [AS] /[P-H] während der Polymerisation kann gewährleistet werden, dass sowohl Mn als auch Mw trotz Verringerung der Restmenge an anorganischem Phosphor konstant bleiben.

Die Beispiele mit den Polymeren Nr. 1, 3 und 7 sind Vergleichsbeispiele. Die Beispiele mit den Polymeren Nr. 2, 4 bis 6 und 8 sind Erfindungsbeispiele.

Tabelle 2 Verhältnis [AS] /[P-H] während der Polymerisation

| Nr. | Rest anorganischer Phosphor [m3'% bez. Polymergehalt] | Rest anorganischer Phosphor [% von m3] | Mittlerer Dosierzeitpunkt des Reglers ($\overline{t}_{do\ si\ ng}$)* in (s) | ($\overline{t}_{do\ sin\ g}$)/ t1-t1,0 | Total NHP ($m_3$/g) | Mn; Mw [g/mol] (PDI) | Umsatz mit Gültigkeit [AS]/[P-H]=XX±0,5 | Rest Acrylsäure [ppm] |
|---|---|---|---|---|---|---|---|---|
| 1[a] | 0,56 | 10,2 | 9000 s | 0,50 | 73,4 | 2800; 4800 (1.7) | 74 % (1,5±0,5) | 20 |
| 2[b] | 0,06 | 1,69 | 5940 s | 0,31 | 50,5 | 3500; 7000 (2.0) | 80 %(2,0±0,5) | 16 |
| 3[a] | 0,03 | 0,757 | 1504 s | 0,08 | 51,4 | 3300; 7500 (2.4) | 46 % (1,5±0,5) | 11 |
| 4[b] | 0,09 | 1,85 | 6221 s | 0,43 | 66,9 | 2900; 5000 (1.7) | 81 % (1,5±0,5) | 48 |
| 5[b] | 0,20 | 4,36 | 7300 s | 0,38 | 61,2 | 2800; 4800 (1.7) | 89 % (1,5±0,5) | 25 |
| 6[b] | 0,17 | 3,18 | 7112 s | 0,37 | 66,4 | 2200; 3600 (1.7) | 85 % (1,5±0,5) | 30 |
| 7[a] | 0,46 | 8,9 | 8450 s | 0,47 | 73,7 | 2900; 4700 (1.6) | 89 % (1,5±0,5) | 1 |
| 8[b] | 0,09 | 0,57 | 5912 s | 0,31 | 141,4 | 1300; 2200 (1.7) | 81 % (0,8±0,5) | 15 |

PDI = Mw/Mn
NHP = Natriumhypophosphit
a Vergleichsbeispiele außerhalb des Anspruchsumfangs
b erfindungsgemäße Beispiele

Tabelle3: Dosierprofile für Beispiele in Tabelle 2

| Nr. | Kessel Vorlage | Zulauf Acrylsäure (Zeitraum [s]) Rate [g/s] | Zulauf NaH2PO2 (Zeitraum[s])Rate [g/s] | Zulauf Persulfat (Zeitraum[s]) Rate [g/s] |
|---|---|---|---|---|
| 1 | 420,7 g $H_2O$ | (0-18k)<br>0,068<br>In Substanz | (0-18,0k)<br>0,01045<br>40 % in Wasser | (0-18,9k)<br>0,0093<br>7 % in Wasser |
| 2 | 343,2 g $H_2O$ | (0-200) 0,042<br>(200-1500) 0,024→0,04<br>(1,5k-14k)<br>0,048→0,096<br>(14k-19k) 0,087→0,034<br>In Substanz | (0-500) 0,05<br>(500-14k)<br>0,0078<br>40 % in Wasser | (0-1k) 0,012<br>(1k-21k)<br>0,0059→0,021<br>7 %in Wasser |
| 3 | 229,5 g $H_2O$ | (0-200) 0,040<br>(200-1.9k) 0,1558<br>(1,9k-5k) 0,1217<br>(5k-8k) 0,0882→0,0395<br>(8k-12k) 0,0633<br>(12k-14k) 0,0438<br>(14k-16k) 0,0341<br>(16k-17k) 0,0243<br>(17k-19k) 0,0049<br>82 % in Wasser | (0-600) 0,1293<br>(600-5k)<br>0,0081 →0,0129<br>40 % in Wasser | (0-1k) 0,0130<br>(1k-21k) 0,0061→0,0217<br>5 % in Wasser |
| 4 | 276,1 g $H_2O$ | (0-200) 0,046<br>(200-1500) 0,045→0,062<br>(1500-14k) 0,052→0,098<br>(14k-14500) 0,096→0,038<br>90 % in Wasser | (0-600)0,061<br>(600-14k)<br>0,0075→0,012<br>40 % in Wasser | (0-1000) 0,0089<br>(1000-21000) 0,0042→0,015<br>5 % in Wasser |
| 5 | 397,0 g $H_2O$ | (0-200) 0,0059<br>(200-1k)<br>0,0098 → 0,0253<br>(1k-1,5k)<br>0,0806 → 0,1101<br>(1,5k-14k) 0,0478→0,0957<br>(14k-19k)<br>0,0867 → 0,0341<br>In Substanz | (0-500) 0,0372<br>(500-16k) 0,00869<br>40 % in Wasser | (0-1 k) 0,0892<br>(1k-21k) 0,0042→0,0149<br>7 % in Wasser |
| 6 | 286,4g<br>$H_2O$ | (0-200) 0,0065<br>(200-1.5k) 0,045→0,062<br>(1.5k-14k) 0,052→0,098<br>(14k-19k) 0,096→0,038<br>90 % in Wasser | (0-500) 0,049<br>(500-14k)<br>0,0075 →0,012<br>(14k-16k) 0,0049<br>40 % in Wasser | (0-1k) 0,0089<br>(1k-21k) 0,0042→0,015<br>6,25 % in Wasser |
| 7 | 420,7 g $H_2O$<br>9,8 g 40%<br>Hypophosphit in<br>H2O | (0-18k) 0,068<br>In Substanz | (0-17100) 0,0102<br>40 % in Wasser | (0-18900) 0,009<br>7 % in Wasser |
| 8 | 343,2 g $H_2O$ | (0-200) 0,042<br>(200-1500) 0,024→0,04<br>(1,5k-14k) | (0-500) 0,1<br>(500-14k)<br>0,0234 | (0-1k) 0,012<br>(1k-21k)<br>0,0059→0,021 |

(fortgesetzt)

| Nr. | Kessel Vorlage | Zulauf Acrylsäure (Zeitraum [s]) Rate [g/s] | Zulauf NaH2PO2 (Zeitraum[s])Rate [g/s] | Zulauf Persulfat (Zeitraum[s]) Rate [g/s] |
|---|---|---|---|---|
| | | 0,048→0,096<br>(14k-19k) 0,087→0,034<br>In Substanz | 40 % in Wasser | 7 %in Wasser |

Sonstige Prozessparameter für alle Experimente: Temperatur des Reaktionsgemisches: T = 95±2 °C, Innendruck: p ≤ 2 bar, Rührerdrehzahl: 180 rpm. Die Dosierraten der drei Zuläufe werden wie folgt beschrieben: Die Zahlen in Klammer definieren ein zeitliches Intervall innerhalb der Gesamtzeit für den Zulauf. Die erste Zahl in der Klammer definiert den Startwert des Intervalls in Sekunden, die letzte Zahl definiert das Ende des Intervalls. Eine einzelne Zahl hinter der Klammer definiert eine zeitlich konstante Dosierrate in g/s für dieses Intervall. Zwei Zahlen hinter der Klammer verbunden mit einem Pfeil definieren ein Dosierprofil mit linear Zu- oder Abnahme der Dosierrate mit der Zeit. Z.B. beutet der Eintrag in der Dosierung für den Regler in Beispiel 3. Im Intervall 1 "(0-600) 0,1293": Zeitlich konstante Dosierung des Reglers mit 0,1293 g/s von 0 Sekunden Prozessdauer bis 600 Sekundenprozessdauer und danach im Intervall 2 "(600-5000) 0,0081→0,0129": linear mit der Zeit ansteigende Dosierrate von 0,0081 g/s auf 0,0129 g/s vom Zeitpunkt 600 s bis 5000 s der Prozessdauer. Tausend Sekunden wird mit k abgekürzt, z.B. "17000" mit "17k".

$$\bar{t}_{dosing} = \frac{1}{m3}\int_{t3,0}^{t3}(d(t) * t)dt$$

**Patentansprüche**

1. Verfahren zur Herstellung von wässrigen Lösungen von Acrylsäure-Polymeren durch Polymerisation von Acrylsäure in Zulauf-Fahrweise mit einem Radikalstarter in Gegenwart von Hypophosphit in Wasser als Lösungsmittel, bei dem

   (i) Wasser und gegebenenfalls Acrylsäure in saurer, nicht neutralisierter Form, gegebenenfalls ein oder mehrere ethylenisch ungesättigte Comonomere, gegebenenfalls wässrige Hypophosphit-Lösung und gegebenenfalls Initiator vorgelegt werden,
   (ii) Acrylsäure in saurer, nicht neutralisierter Form, gegebenenfalls ein oder mehrere ethylenisch ungesättigte Comonomere, wässrige Radikalstarter-Lösung und wässrige Hypophosphit-Lösung zugegeben werden,
   (iii) nach Beendigung des Acrylsäure-Zulaufs zu der wässrigen Lösung eine Base zugegeben wird,

   wobei der Comonomer-Gehalt 30 Gew.-%, bezogen auf den Gesamtmonomer-Gehalt, nicht übersteigt, **dadurch gekennzeichnet, dass** die Acrylsäure, die wässrige Radikalstarter-Lösung und die wässrige Hypophosphit-Lösung derart zugegeben werden, dass das Molverhältnis x von Acrylsäure zu Phosphor-gebundenem Wasserstoff [AS]/[P-H] über einen Zeitraum, in dem mindestens 75 % der Acrylsäure umgesetzt werden, einen bis auf ± 0,5 konstanten Wert x aufweist, der im Bereich von 0,8 bis 2 liegt, dass der zeitlich gemittelte Dosierzeitpunkt der Hypophosphit-Lösung

$$\bar{t}_{dosing} = \frac{1}{m3}\int_{t3,0}^{t3}(d(t) * t)dt$$

   das 0,3 bis 0,47-fache der gesamten Zulaufzeit der Acrylsäure (t1-t1,0) ist, und dass der zeitlich gemittelte Dosierzeitpunkt der Hypophosphit-Lösung das 0,3 - 0,45-fache der gesamten Laufzeit der Hypophosphit-Lösung ist.

2. Verfahren nach Anspruch 1, **dadurch gekennzeichnet, dass** die Gesamtmenge m1 an Acrylsäure über einen Zeitraum (t1-t1,0), die Gesamtmenge m2 an Radikalstarter-Lösung über einen Zeitraum (t2-t2,0) und die Gesamtmenge m3 an wässriger Hypophosphit-Lösung über einen Zeitraum (t3-t3,0) kontinuierlich mit konstanter oder sich

ändernder Dosierrate oder diskontinuierlich zugegeben werden und die Polymerisation im Zeitraum (t4-t4,0) stattfindet, wobei der Zeitpunkt t1,0, t2,0 bzw. t3,0 den Start des jeweiligen Zulaufs und t4,0 den Beginn der Polymerisation bestimmt.

**3.** Verfahren nach Anspruch 1 oder 2, **dadurch gekennzeichnet, dass** das Molverhältnis x von Acrylsäure zu Phosphor-gebundenem Wasserstoff [AS]/[P-H] über einen Zeitraum, in dem mindestens 75 % der Acrylsäure umgesetzt werden, 1,5 ± 0,5 beträgt.

**4.** Verfahren nach einem der Ansprüche 1 bis 3, **dadurch gekennzeichnet, dass** die Gesamtzulaufzeit der Hypophosphit-Lösung t3 - t3,0 80 bis 500 min beträgt.

**5.** Verfahren nach einem der Ansprüche 1 bis 4, **dadurch gekennzeichnet, dass** alle Zuläufe gleichzeitig beginnen.

**6.** Verfahren nach einem der Ansprüche 1 bis 5, **dadurch gekennzeichnet, dass** bis zu 30 Gew.-% Comonomere, ausgewählt aus der Gruppe bestehend aus Methacrylsäure, Maleinsäure(anhydrid), Vinylsulfonsäure, Allylsulfonsäure und 2-Acrylamido-2-methylpropan-sulfonsäure, mit einpolymerisiert werden.

**7.** Verfahren nach einem der Ansprüche 1 bis 6, **dadurch gekennzeichnet, dass** die Polymerisation unter Inertgasatmosphäre durchgeführt wird.

**Claims**

**1.** A process for producing aqueous solutions of acrylic acid polymers by polymerization of acrylic acid in feed operation with a free-radical starter in the presence of hypophosphite in water as solvent, which comprises

(i) initially charging water and optionally acrylic acid in acidic, unneutralized form, optionally one or more ethylenically unsaturated comonomers, optionally aqueous hypophosphite solution and optionally initiator,
(ii) adding acrylic acid in acidic, unneutralized form, optionally one or more ethylenically unsaturated comonomers, aqueous free-radical starter solution and aqueous hypophosphite solution,
(iii) adding a base to the aqueous solution after termination of the acrylic acid feed,

wherein the comonomer content does not exceed 30 wt% based on the total monomer content, wherein the acrylic acid, the aqueous free-radical starter solution and the aqueous hypophosphite solution are added such that the molar ratio x of acrylic acid to phosphorus-bound hydrogen [AA]/[P-H] over a time period in which at least 75% of the acrylic acid is converted has a value x which is constant to within ± 0.5 and is in the range from 0.8 to 2, wherein the time-averaged dosing time point for the hypophosphite solution

$$\bar{t}_{dosing} = \frac{1}{m3}\int_{t3.0}^{t3}(d(t) * t)dt$$

is 0.3 to 0.47 times the total feed time for the acrylic acid (t1-t1.0), and wherein the time-averaged dosing time point for the hypophosphite solution is 0.3-0.45 times the total running time for the hypophosphite solution.

**2.** The process according to claim 1, wherein said process comprises adding continuously at a constant or varying dosing rate or discontinuously the total amount m1 of acrylic acid over a time period (t1-t1.0), the total amount m2 of free-radical starter solution over a time period (t2-t2.0) and the total amount m3 of aqueous hypophosphite solution over a time period (t3-t3.0) and the polymerization takes place in the time period (t4-t4.0), wherein the time points t1.0, t2.0 and t3.0 determine the start of the respective feeds and t4.0 determines commencement of the polymerization.

**3.** The process according to claims 1 or 2, wherein the molar ratio x of acrylic acid to phosphorus-bound hydrogen [AA]/[P-H] over a time period in which at least 75% of the acrylic acid is converted is 1.5 ± 0.5.

**4.** The process according to any of claims 1 to 3, wherein the total feed time for the hypophosphite solution t3 - t3.0 is 80 to 500 min.

5. The process according to any of claims 1 to 4, wherein all feeds commence simultaneously.

6. The process according to any of claims 1 to 5, wherein up to 30 wt% of comonomers selected from the group consisting of methacrylic acid, maleic acid, maleic anhydride, vinylsulfonic acid, allylsulfonic acid and 2-acrylamido-2-methylpropanesulfonic acid are copolymerized.

7. The process according to any one of claims 1 to 6, wherein the polymerization is carried out under an inert gas atmosphere.

**Revendications**

1. Procédé pour la préparation de solutions aqueuses de polymères d'acide acrylique par polymérisation d'acide acrylique dans un mode d'alimentation avec un initiateur de radicaux en présence d'hypophosphite dans l'eau en tant que solvant, dans lequel

(i) de l'eau et éventuellement de l'acide acrylique sous forme acide, non neutralisée, éventuellement un ou plusieurs comonomères éthyléniquement insaturés, éventuellement une solution aqueuse d'hypophosphite et éventuellement un initiateur sont chargés,
(ii) de l'acide acrylique sous forme acide, non neutralisée, éventuellement un ou plusieurs comonomères éthyléniquement insaturés, de la solution aqueuse d'initiateur de radicaux et de la solution aqueuse d'hypophosphite sont ajoutés,
(iii) après la fin de l'alimentation en acide acrylique à la solution aqueuse, une base est ajoutée,

la teneur en comonomère ne dépassant pas 30 % en poids, par rapport à la teneur totale de monomères, **caractérisé en ce que** l'acide acrylique, la solution aqueuse d'initiateur de radicaux et la solution aqueuse d'hypophosphite sont ajoutés de telle façon que le rapport molaire x d'acide acrylique à hydrogène lié à phosphore [AS]/[P-H] présente, sur une période de temps dans laquelle au moins 75 % de l'acide acrylique sont transformés, une valeur constante x jusqu'à ± 0,5, qui se situe dans la plage de 0,8 à 2, **en ce que** le temps de dosage moyen dans le temps de la solution d'hypophosphite

$$\bar{t}_{dosing} = \frac{1}{m3}\int_{t3,0}^{t3}(d(t) * t)dt$$

est 0,3 à 0,47 fois le temps total d'alimentation de l'acide acrylique (t1 à t1,0), et **en ce que** le temps de dosage moyen dans le temps de la solution d'hypophosphite est 0,3 à 0,45 fois le temps total de la solution d'hypophosphite.

2. Procédé selon la revendication 1, **caractérisé en ce que** la quantité totale m1 d'acide acrylique pendant une période de temps (t1 à t1,0), la quantité totale m2 de solution d'initiateur de radicaux pendant une période de temps (t2 à t2,0) et la quantité totale m3 de solution aqueuse d'hypophosphite pendant une période de temps (t3 à t3,0) sont ajoutées de manière continue selon une vitesse de dosage constante ou variable ou de manière discontinue et la polymérisation a lieu dans la période de temps (t4 à t4,0), le temps t1,0, t2,0 respectivement t3,0 déterminant le début de l'alimentation respective et t4,0 le début de la polymérisation.

3. Procédé selon la revendication 1 ou 2, **caractérisé en ce que** le rapport molaire x d'acide acrylique à hydrogène lié à phosphore [AS]/[P-H] sur une période de temps dans laquelle au moins 75 % de l'acide acrylique est transformé, est de 1,5 ± 0,5.

4. Procédé selon l'une quelconque des revendications 1 à 3, **caractérisé en ce que** le temps total d'alimentation de la solution d'hypophosphite t3 à t3,0 est de 80 à 500 min.

5. Procédé selon l'une quelconque des revendications 1 à 4, **caractérisé en ce que** toutes les alimentations commencent en même temps.

6. Procédé selon l'une quelconque des revendications 1 à 5, **caractérisé en ce que** jusqu'à 30 % en poids de comonomères, choisis dans le groupe constitué par l'acide méthacrylique, l'acide (l'anhydride) maléique, l'acide vinylsulfonique, l'acide allylsulfonique et l'acide 2-acrylamido-2-méthylpropanesulfonique sont copolymérisés

7. Procédé selon l'une quelconque des revendications 1 à 6, **caractérisé en ce que** la polymérisation est mise en œuvre sous une atmosphère de gaz inerte.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 405818 A
- EP 510831 A
- EP 618240 A
- EP 1074293 A
- WO 2012104401 A
- WO 2012104304 A
- US 5216099 A


### In der Beschreibung aufgeführte Nicht-Patentliteratur


- **M.J.R. CANTOW U.A.** *J.Polym.Sci. ,A,* 1967, (5), 1391-1394
- *Polymeren,* (2), 2-6, 8